# EUROPÄISCHE PATENTSCHRIFT

(11) **EP 1 055 503 B1**
(45) Veröffentlichungstag und Bekanntmachung des Hinweises auf die Patenterteilung: **18.09.2002**
(21) Anmeldenummer: 00106368.4
(22) Anmeldetag: 24.03.2000
(51) Int. Cl.: B29C 47/20, B29C 55/28

(54) **Extruderdüsenkopf**
Extrusion head
Tête d'extrusion

(30) Priorität: 28.05.1999 DE 19924540
(43) Veröffentlichungstag der Anmeldung: 29.11.2000
(73) Patentinhaber: Windmöller & Hölscher, D-49525 Lengerich (DE)
(72) Erfinder: Linkies, Jürgen, 49536 Lienen (DE); Beckmann, Hans-Udo, 58509 Lüdenscheid (DE); aus dem Moore , Dieter, 48477 Hörstel (DE)

(56) Entgegenhaltungen:
- DE-B- 1 139 970
- US-A- 3 343 214
- PATENT ABSTRACTS OF JAPAN vol. 012, no. 289 (M-728), 8. August 1988 (1988-08-08) & JP 63 067133 A (TOMY KIKAI KOGYO KK), 25. März 1988 (1988-03-25)

## Beschreibung

Die Erfindung betrifft einen Extruderdüsenkopf, vorzugsweise Folienblaskopf für Mono- und/oder Coextrusion, bestehend aus mindestens einem inneren zylindrischen Dorn und einem diesen konzentrisch einfassenden Mantel, zwischen denen ein ringförmiger Kanal gebildet ist, der in den Düsenspalt mündet, und aus mindestens einer in dem dem Düsenspalt gegenüberliegenden Bereich in den ringförmigen Kanal mündenden, eine Kunststoffschmelze zuführenden Leitung.

Folienblasköpfe dieser Art sind bekannt. Üblicherweise sind in den Dom eine oder mehrere wendelförmige Nuten eingearbeitet, deren Tiefe von dem oder den Zuführungskanälen ausgehend in Richtung zu dem Düsenspalt abnimmt, so daß die Kunststoffschmelze zunehmend über die die Kanäle begrenzenden Stege hinwegtritt und eine gleichmäßige Strömung in axialer Richtung annimmt. Ein besonderes Problem bekannter Extruderdüsenköpfe besteht darin, daß der Dom jenseits des Anfangs des ringförmigen Kanals dichtend in eine zylindrische Bohrung des Mantels eingepaßt wird. Wird der Extruderdüsenkopf jedoch durch die diesen durchströmende Kunststoffschmelze erwärmt, dehnt sich der Mantel aufgrund seines größeren Durchmessers stärker als der zentrale Dorn, so daß sich zwischen beiden ein Spalt bildet, in den die unter Druck eingespeiste Kunststoffschmelze eindringt. Da sich die Schmelze im Bereich dieses Spalts aufstaut und aufgrund ihrer langen Verweilzeit in dem heißen Düsenkopf sich zersetzen und verspröden kann, können von der Schmelze Teilchen der abgelagerten Schmelze mitgerissen werden, die sich in dem extrudierten Folienschlauch bzw. der aufgeblasenen Schlauchblase als Störungsstellen bemerkbar machen.

Aufgabe der Erfindung ist es daher, einen Extruderdüsenkopf der eingangs angegebenen Art zu schaffen, bei dem sich bei Erwärmung kein Spalt zwischen dem zentralen Dom und dem diesen einfassenden Mantel bilden kann, in den sich Kunststoffschmelze stauen und ablagern kann.

Erfindungsgemäß wird diese Aufgabe dadurch gelöst, daß im Bereich des Anfangs des ringförmigen Kanals zwischen den Dorn und den Mantel ein Ring mit einem derartigen Wärmeausdehnungskoeffizienten γ eingesetzt ist, daß er den Spalt zwischen dem Mantel und dem Ring bei Erwärmung dichtet.

Der erfindungsgemäß vorgesehene Ring weist einen anderen Wärmeausdehnungskoeffizienten γ als das Material des Dorns und des Mantels auf, so daß er den sich aufgrund der größeren Wärmedehnung des Mantels sich bildenden Spalt zwischen Dom und Mantel gleichsam wie eine Preßpackung abdichtet.

Zweckmäßigerweise ist auf den Dorn ein Ring aufgesetzt, der einen größeren Wärmeausdehnungskoeffizienten aufweist als der Mantel.

Nach einer anderen Ausführungsform ist vorgesehen, daß auf die innere Wand des Mantels ein Ring aufgesetzt ist, der einen kleineren Wärmeausdehnungskoeffizienten aufweist als der Mantel.

Nach einer bevorzugten Ausführungsform ist vorgesehen, daß die Ringe in ringförmigen Absätzen des Dorns und/oder des Mantels gehaltert sind. Zum Aufschieben der Ringe kann also der Mantel bis zu dem stufenförmigen Absatz mit einer Bohrung größeren Durchmessers und/oder der Dom mit einem kleineren Durchmesser versehen sein. Der Ring liegt einmal mit einer Stirnfläche an der Stirnfläche an der Stirnfläche des ringförmigen Absatzes und zum anderen mit seinem äußeren oder inneren Umfang an dem Mantel oder dem Dom in der Ausdrehung an.

Ist der Dom und der Mantel aus Stahl oder einer Stahllegierung hergestellt, besteht der Ring zweckmäßigerweise aus Kupfer, einer Kupferlegierung, Bronze, Messing oder einer Messinglegierung.

Nach einer anderen Ausführungsform wird die Aufgabe dadurch gelöst, daß der Dorn und der diesen einfassende Mantel in der Weise unterschiedliche Wärmeausdehnungskoeffizienten aufweisen, daß der unterhalb des ringförmigen Kanals befindliche, den Dom mit dem Mantel verbindende Sitz bei Erwärmung dichter wird. Bei dieser Ausführungsform erhöht sich der Preßsitz zwischen Dorn und Mantel, so daß im Sitzbereich etwa noch befindliche Spalte geschlossen werden.

Nach einer weiteren Ausführungsform wird die Aufgabe dadurch gelöst, daß in den Mantel ein Rohrstück mit einem derartigen Wärmeausdehnungskoeffizienten eingeschrumpft ist, daß der unterhalb des ringförmigen Kanals befindliche, den Dom mit dem Mantel verbindende Sitz bei Erwärmung dichter wird.

Nach einer anderen Ausführungsform wird die Aufgabe dadurch gelöst, daß auf den Dorn ein Rohrstück mit einem derartigen Wärmeausdehnungskoeffizienten aufgeschrumpft ist, daß der unterhalb des ringförmigen Kanals befindliche, den Dom mit dem Mantel verbindende Sitz bei Erwärmung dichter wird. Auch in diesem Fall wird der Preßsitz dichter, so daß Spalte vermieden werden.

In das Rohrstück bzw. durch das Rohrstück hindurch in den Dorn können eine oder mehrere wendelförmige Nuten mit zum Düsenspalt hin abnehmender Tiefe eingefräst sein.

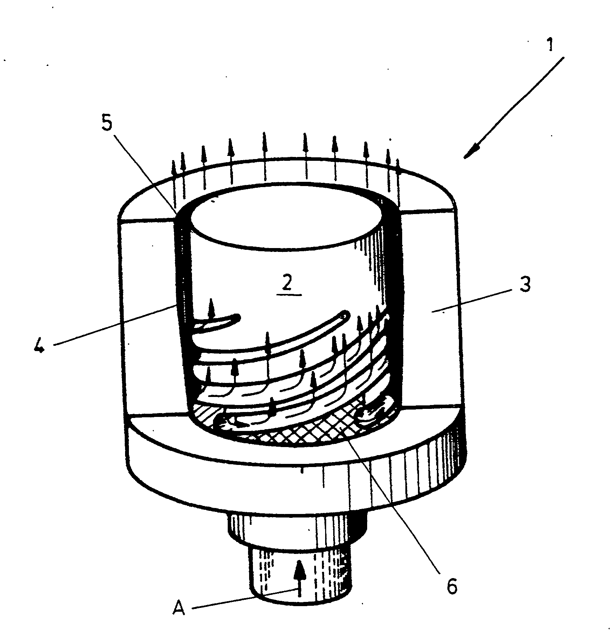

Ein Ausführungsbeispiel der Erfindung wird nachstehend anhand der Zeichnung, in der perspektivisch ein Folienblaskopf mit teilweise geschnittenem äußerem Mantel dargestellt ist, näher erläutert.

Der Folienblaskopf 1 besteht aus einem inneren zentralen Dom 2, der von einem äußeren Mantel 3 konzentrisch eingefaßt ist. Zwischen dem Dom 2 und dem Mantel 3 ist ein Ringspalt 4 gebildet.

Der Dom 2 ist auf seinem Umfang mehrgängig mit wendelförmigen Nuten 3 versehen, deren Tiefe ausgehend von dem Anfang des Ringspalts 4 zu dem Düsenspalt 5 hin abnimmt. Die Nuten 3 enden im Abstand vor dem Ringspalt 5. Der Düsenkopf 1 ist mit einem axialen Zuführungskanal für die Kunststoffschmelze versehen, durch den in Richtung des Pfeils A eine Kunststoffschmelze zugeführt wird. Der Zuführungskanal mündet in den Anfangsbereich der wendelförmigen Nuten 3, so daß die Schmelze in Richtung der wendelförmigen Nuten gefördert und aufgrund der abnehmenden Nuthöhe zunehmend in Richtung der Pfeile über die die Nuten trennenden Stege in axialer Richtung umgelenkt wird.

In dem Anfangsbereich des Ringkanals 4 und jenseits von diesem ist in eine Ausdrehung der Innenwandung des Mantels 3 und/oder eine Eindrehung des Doms 2 ein Dichtungsring 6 eingelegt, der einen anderen Wärmeausdehnungskoeffizienten γ als der Dom 2 und der Mantel 3 aufweisen. Dieser Wärmeausdehnungskoeffizient des Ringes ist derart auf den Dorn 2 bzw. den Mantel 3 abgestimmt, daß er eine dichtende Packung bildet, wenn sich bei Erwärmung des Folienblaskopfes der Mantel 3 aufgrund seines größeren Durchmessers stärker ausdehnt als der Dom 2.

## Patentansprüche

1. Extruderdüsenkopf, vorzugsweise Folienblaskopf für Mono- und/oder Coextrusion, bestehend aus mindestens einem inneren zylindrischen Dom (2) und einem diesen konzentrisch einfassenden Mantel (3), zwischen denen ein ringförmiger Kanal (4) gebildet ist, der in den Düsenspalt (5) mündet, und aus mindestens einer in dem dem Düsenspalt gegenüberliegenden Bereich in den ringförmigen Kanal mündenden, eine Schmelze zuführenden Leitung,
**dadurch gekennzeichnet,**
**daß** im Bereich des Anfangs des ringförmigen Kanals (4) zwischen den Dorn (2) und den Mantel (3) ein Ring (6) mit einem derartigen Wärmeausdehnungskoeffizienten γ eingesetzt ist, daß er den Spalt zwischen dem Mantel (3) und dem Dom (2) bei Erwärmung dichtet.

2. Extruderdüsenkopf nach Anspruch 1, **dadurch gekennzeichnet, daß** auf den Dom (2) ein Ring (6) aufgesetzt ist, der einen größeren Wärmeausdehnungskoeffizienten aufweist als der Mantel.

3. Extruderdüsenkopf nach Anspruch 1, **dadurch gekennzeichnet, daß** auf die innere Wand des Mantels (3) ein Ring (6) aufgesetzt ist, der einen kleineren Wärmeausdehnungskoeffizienten aufweist als der Mantel.

4. Extruderdüsenkopf nach einem der Ansprüche 1 bis 3, **dadurch gekennzeichnet, daß** der Ring (6) in ringstufenförmigen Absätzen des Doms (2) und/oder des Mantels (3) gehaltert sind.

5. Extruderdüsenkopf nach einem der Ansprüche 1 bis 4, **dadurch gekennzeichnet, daß** der Dorn (2) und der Mantel (3) aus Stahl oder einer Stahllegierung und der Ring (6) aus Kupfer, einer Kupferlegierung, Bronze, Messing oder einer Messinglegierung besteht.

6. Extruderkopf nach dem Oberbegriff des Anspruchs 1, **dadurch gekennzeichnet, daß** der Dom und der diesen einfassende Mantel in der Weise unterschiedliche Wärmeausdehnungskoeffizienten aufweisen, daß der unterhalb des ringförmigen Kanals befindliche, den Dom mit dem Mantel verbindende Sitz bei Erwärmung dichter wird.

7. Extruderkopf nach dem Oberbegriff des Anspruchs 1, **dadurch gekennzeichnet, daß** in den Mantel ein Rohrstück mit einem derartigen Wärmeausdehnungskoeffizienten eingeschrumpft ist, daß der unterhalb des ringförmigen Kanals befindliche, den Dorn mit dem Mantel verbindende Sitz bei Erwärmung dichter wird.

8. Extruderdüsenkopf nach dem Oberbegriff des Anspruchs 1, **dadurch gekennzeichnet, daß** auf den Dom ein Rohrstück mit einem derartigen Wärmeausdehnungskoeffizienten aufgeschrumpft ist, daß der unterhalb des ringförmigen Kanals befindliche, den Dom mit dem Mantel verbindende Sitz bei Erwärmung dichter wird.

9. Extruderdüsenkopf nach Anspruch 8, **dadurch gekennzeichnet, daß** in das aufgeschrumpfte Rohrstück bzw. durch das Rohrstück hindurch in den Dom eine oder mehrere wendelförmige Nuten mit zum Düsenspalt hin abnehmender Tiefe eingefräst sind.

## Claims

1. Extruder nozzle head, preferably film blowing head for mono-extrusion and/or co-extrusion, consisting of at least one inner cylindrical mandrel (2) and a casing (3) concentrically surrounding it, between which is formed an annular duct (4), which opens into the nozzle gap (5), and consisting of at least one conduit supplying a melt and opening into the region in the annular duct opposite to the nozzle gap, **characterized in that** a ring (6) is inserted in the region of the beginning of the annular duct (4) between the mandrel (2) and the casing (3), which ring has such a thermal expansion coefficient γ that, on heating, it seals the gap between the casing (3) and the mandrel (2).

2. Extruder nozzle head according to Claim 1, **characterized in that** a ring (6), which exhibits a larger thermal expansion coefficient than the casing, is placed on the mandrel (2).

3. Extruder nozzle head according to Claim 1, **characterized in that** a ring (6), which exhibits a smaller thermal expansion coefficient than the casing, is placed on the inner wall of the casing (3).

4. Extruder nozzle head according to one of Claims 1 to 3, **characterized in that** the ring (6) is held in annular step shaped shoulders of the mandrel (2) and/or of the casing (3).

5. Extruder nozzle head according to one of Claims 1 to 4, **characterized in that** the mandrel (2) and the casing (3) consist of steel or a steel alloy and the ring (6) consists of copper, a copper alloy, bronze, brass or a brass alloy.

6. Extruder head according to the preamble to Claim 1, **characterized in that** the mandrel and the casing enclosing the latter exhibit different thermal expansion coefficients in such a way that the seat located below the annular duct and connecting the mandrel to the casing becomes more impermeable on heating.

7. Extruder head according to the preamble to Claim 1, **characterized in that** a pipe piece is shrunk into the casing, which pipe piece has such a thermal expansion coefficient that the seat located below the annular duct and connecting the mandrel to the casing becomes more impermeable on heating.

8. Extruder nozzle head according to the preamble to Claim 1, **characterized in that** a pipe piece is shrunk onto the mandrel, which pipe piece has such a thermal expansion coefficient that the seat located below the annular duct and connecting the mandrel to the casing becomes more impermeable on heating.

9. Extruder nozzle head according to Claim 8, **characterized in that** one or a plurality of helical-shaped grooves of decreasing depth towards the nozzle gap are milled into the mandrel in the shrunk-on tube piece or through the tube piece.

## Revendications

1. Tête d'extrusion, de préférence tête de soufflage de feuille pour une mono-et/ou coextrusion, constituée d'au moins un mandrin cylindrique interne (2) et d'une enveloppe (3) entourant celui-ci d'une manière concentrique, entre lesquels est formé un canal annulaire (4) qui débouche dans la fente de filière (5) et d'au moins un conduit débouchant dans la zone opposée à la fente de filière dans le canal annulaire, acheminant une fusion,
**caractérisée,**
**en ce qu'**il est placé au voisinage du début du canal annulaire (4) entre le mandrin (2) et l'enveloppe (3) une bague (6) d'un coefficient de dilatation thermique γ tel qu'elle rend étanche la fente entre l'enveloppe (3) et le mandrin (2) lors d'un échauffement.

2. Tête d'extrusion selon la revendication 1, **caractérisée en ce qu'**il est placé sur le mandrin (2) une bague (6) qui présente un plus grand coefficient de dilatation thermique que l'enveloppe.

3. Tête d'extrusion selon la revendication 1, **caractérisée en ce qu'**il est placé sur la paroi interne de l'enveloppe (3) une bague (6) qui présente un plus petit coefficient de dilatation thermique que l'enveloppe.

4. Tête d'extrusion selon l'une des revendications 1 à 3, **caractérisée en ce que** la bague (6) est retenue dans des gradins annulaires du mandrin (2) et/ou de l'enveloppe (3).

5. Tête d'extrusion selon l'une des revendications 1 à 4, **caractérisée en ce que** le mandrin (2) et l'enveloppe (3) sont réalisés en acier ou en un alliage d'acier et la bague (6) en cuivre, un alliage de cuivre, en bronze, en laiton ou en un alliage de laiton.

6. Tête d'extrusion selon le préambule de la revendication 1, **caractérisée en ce que** le mandrin et l'enveloppe entourant celui-ci présentent différents coefficients de dilatation thermique de telle manière que le siège se trouvant en dessous du canal annulaire, reliant le mandrin à l'enveloppe, devient plus étanche lors d'un échauffement.

7. Tête d'extrusion selon le préambule de la revendication 1, **caractérisée en ce qu'**il est fretté dans l'enveloppe une pièce tubulaire d'un tel coefficient de dilatation thermique que le siège se trouvant en dessous du canal annulaire, reliant le mandrin à l'enveloppe, devient plus étanche lors de l'échauffement.

8. Tête d'extrusion selon le préambule de la revendication 1, **caractérisée en ce qu'**il est fretté sur le mandrin une pièce tubulaire d'un tel coefficient de dilatation thermique que le siège se trouvant en dessous du canal annulaire, reliant le mandrin à l'enveloppe, devient plus étanche lors de l'échauffement.

9. Tête d'extrusion selon la revendication 8, **caractérisée en ce que** sont fraisés dans la pièce tubulaire frettée respectivement à travers la pièce tubulaire, dans le mandrin, une ou plusieurs rainures hélicoïdales d'une profondeur décroissant vers la fente de filière.
